# EUROPÄISCHE PATENTSCHRIFT

(11) **EP 0 579 604 B1**
(45) Veröffentlichungstag und Bekanntmachung des Hinweises auf die Patenterteilung: **29.03.1995**
(21) Anmeldenummer: 92901951.1
(22) Anmeldetag: 17.12.1991
(51) Int. Cl.: C08G 61/02, C08G 61/12, H01B 1/12

(54) **LEITERPOLYMERE MIT KONJUGIERTEN DOPPELBINDUNGEN**
CONDUCTIVE POLYMERS WITH CONJUGATED DOUBLE BONDS
POLYMERES EN ECHELLE A DOUBLES LIAISONS CONJUGUEES

(30) Priorität: 11.04.1991 DE 4111878
(43) Veröffentlichungstag der Anmeldung: 26.01.1994
(73) Patentinhaber: HOECHST AKTIENGESELLSCHAFT, 65926 Frankfurt am Main (DE)
(72) Erfinder: MÜLLEN, Klaus, Prof. Dr., D-55128 Mainz-Bretzenheim (DE); SCHERF, Ullrich, Dr., D-55128 Mainz-Kastell (DE)
(86) Internationale Anmeldenummer: EP9102432
(87) Internationale Veröffentlichungsnummer: WO9218552

(56) Entgegenhaltungen:
- EP-A- 0 099 984
- EP-A- 0 191 726
- EP-A- 0 218 093
- EP-A- 0 357 059
- US-A- 4 452 725

## Beschreibung

Die Vorliegende Erfindung betrifft neue Polymere mit konjugierten Doppelbindungen, welche aus Carbo- und/oder heterozyklischen Ringen aufgebaut sind und jedes dieser Ringe mit jedem ihm benachbarten Ring an zwei Bindungsstellen in Art einer Leiter verknüpft sind (Leiterpolymere).

### Stand der Technik

Polypyrrole und deren Copolymere sind u.a. in EP-A-99 984 beschrieben. In EP-A-218 093 sind Polymere mit konjugierten Doppelbindungen geschildert, in denen (hetero)- aromatische Kerne jeweils durch ein Kohlenstoffatom miteinander verbunden sind.

Leiterpolymere mit konjugierten Doppelbindung entstehen bekanntlich beim Graphitieren von Polyacrylnitril oder bei der Pyrolyse dieses Polymers in Gegenwart von dehydrierenden Katalysatoren und sind als "Black Orlon" bekannt ("ORLON" ist ein eingetragenes Warenzeichen der E. I. Du Pont de Nemours Co.). Gemäß der für dieses Polymer vorgeschlagenen Konstitution besteht es aus Dihydropyrroleinheiten, welche mit jeder Nachbareinheit sowohl durch eine Methingruppe als auch durch ein Stickstoffatom verbunden sind. Durch intramolekularen Ringschluß in Poly(vinylmethylketon) entsteht ein Polymer aus Tetrahydrobenzoleinheiten, die mit jeder Nachbareinheit sowohl durch eine Methylen- als auch durch eine Methingruppe miteinander verbunden ist.

### Aufgabe

Aufgabe der vorliegenden Erfindung war die Synthese neuer Stoffe, insbesondere neuer Zwischenprodukte zur Herstellung von elektrisch leitfähigen oder nichtlineare optische Eigenschaften besitzender Polymere. Ferner war es Aufgabe der Vorliegenden Erfindung, ein neues Verfahren zur Herstellung von Polymeren bereitzustellen. Desgleichen war es Aufgabe der vorliegenden Erfindung, neue Polymere darzustellen. Schließlich war es Aufgabe der vorliegenden Erfindung, dünne Schichten auf Substraten herzustellen, die für den Einsatz der Polymere für optische, elektrooptische und elektronische Zwecke geeignet sind.

Die Vorstehend genannten Aufgaben werden durch die vorliegende Erfindung gelöst durch Polymere mit einem ausgedehntem System von konjugierten Doppelbindungen, aufgebaut aus homo- und/oder heterozyklischen Ringen, welche jeweils paarweise miteinander verbunden sind, so daß jeweils ein Ring an zwei vicinalen ringständigen Atomen mit dem benachbarten Ring verknüpft ist, dadurch gekennzeichnet, daß eine dieser Verknüpfungen durch eine chemische Bindung zu einem ringständigen Atom des Nachbarringes und die andere über ein Kohlenstoff-, Sauerstoff-, Stickstoff- oder Schwefelatom zu einem dem oben genannten ringständigen Atom vicinalem Atom des Nachbarrings erfolgt.

Die erfindungsgemäßen Polymere unterscheiden sich von den obenstehend als Stand der Technik geschilderten Leiterpolymere dadurch, daß die Einheiten jeweils sowohl durch eine chemische Bindung als auch über ein Atom als Brücke miteinander verbunden sind. Durch diese Art der Verknüpfung entsteht ein Fünfring und nicht - wie in den bekannten Leiterpolymeren - ein Sechsring.

Vorzugsweise sind die erfindungsgemäßen Polymere aufgebaut aus Einheiten der Formel (1) 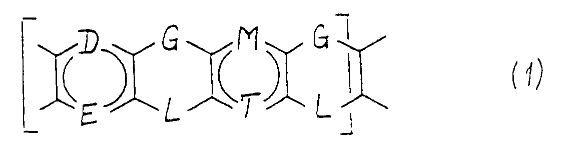
worin bedeuten
- **D** und **M**: unabhängig voneinander jeweils eine chemische Bindung oder ein Rest der Formel C-R, wobei C für ein Kohlenstoffatom steht und
- **R**: gleiche oder verschiedene Reste sind, nämlich Wasserstoffatome oder gegebenenfalls substituierte C₁- bis C₂₀-Kohlenwasserstoffreste,
- **E** und **T**: unabhängig voneinander jeweils ein Sauerstoff- oder Schwefelatom, ein Rest der Formel N-R, oder, falls der zum gleichen Ring gehörige Rest **D** bzw. **M** ein Rest der Formel C-R ist, auch ein Rest der Formel C-R sein kann, pro Ring jeweils einer der Reste
- **G** und **L**: eine chemische Einfachbindung ist
und pro Ring derjenige der Reste **G** und **L**, der keine Einfachbindung bedeutet, ein Rest der Formel CR₂ ist, wobei vorzugsweise mindestens einer der Reste R ein Wasserstoffatom ist,
oder können durch Dehydrierung von aus Einheiten der Formel (1) aufgebauten Polymeren hergestellt werden.

Bevorzugt als erfindungsgemäße Polymere sind solche, die aus Einheiten der Formeln (4), (5) und/oder (6) aufgebaut sind bzw. die aus diesen Polymeren durch Entfernung von zwei Wasserstoffatomen pro Einheit (Dehydrierung) darstellbaren Polymere. 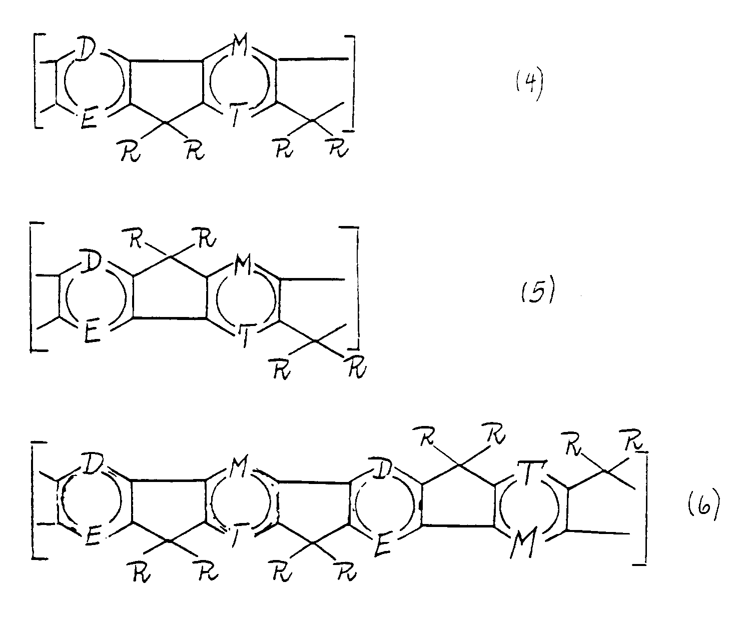
Vorzugsweise ist in der obigen Formel (1) pro Ring jeweils einer der Reste **G** und **L** eine chemische Bindung, während der jeweils andere Rest ein Rest der Formel CHR ist.

Vorzugsweise sind die Reste **D** und **E** Reste der Formel C-R.

Vorzugsweise sind die Reste **M** und **T** Reste der Formel C-R.

Bevorzugt als erfindungsgemäße Polymere sind solche, welche aus Einheiten der Formeln (7), (8), (9), (10), (11) und/oder (12) aufgebaut sind. 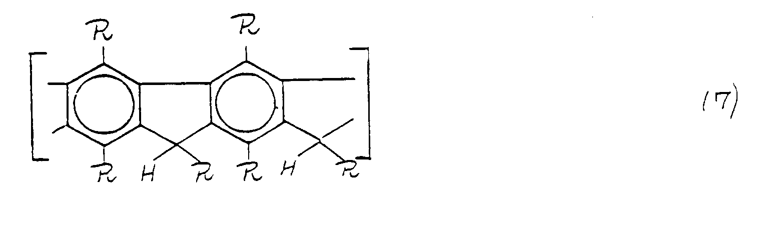 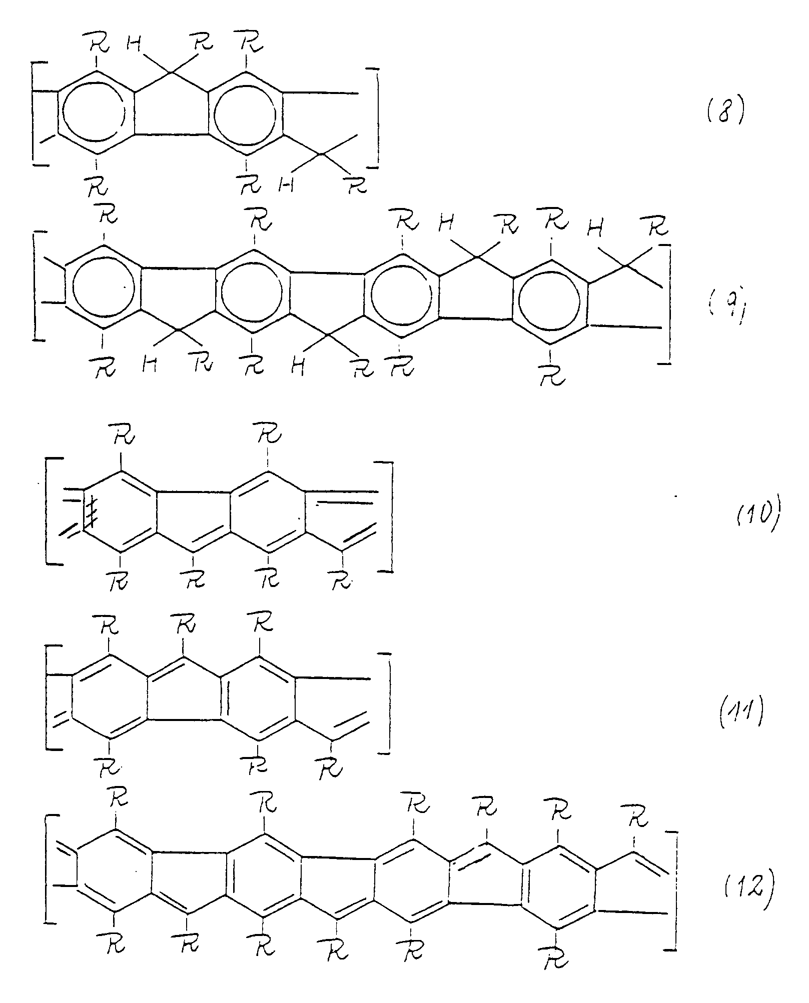
Beispiele für Reste **R** sind Wasserstoffatome; Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Oktylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest;

Beispiele für substituierte Reste **R** sind Cyanalkylreste, wie der β-Cyanethylrest, und halogenierte Kohlenwasserstoffreste, beispielsweise Halogenalkylreste, wie der 3,3,3-Tri-fluor-n-propylrest, der 2,2,2,2',2',2'-Hexafluorisopropylrest, der Heptafluorisopropylrest, und Halogenarylreste, wie der o-, m-, und p-Chlorphenylrest.

Die erfindungsgemäßen Polymere können Dotierungsmittel enthalten. Durch Zusatz von solchen bekannten Dotierstoffen kann die Leitfähigkeit der Polymeren erhöht werden.

Beispiele für Dotierungsmittel sind Alkalimetalle, wie Natrium oder Kalium; Protonensäuren wie H₂SO₄, HClO₄, H₂Cr₂O₇, HJ und HNO₃; Lewis-Säuren wie SbCl₅, AsCl₅, TiCl₄, FeCl₃, SnCl₄, ZnCl₂, AsF₅ und Halogen, wie z.B. Jod. Die Behandlung der erfindungsgemäßen Zusammensetzungen mit Dotierungsmittel (n) wird im allgemeinen so durchgeführt, daß man die Dämpfe oder Lösungen des Dotierungsmittels auf die Polymeren einwirken läßt. Meist arbeitet man bei etwa 10 bis 30°C, meist unter Feuchtigkeitsausschluß, oft unter Luftausschluß. Die dotierten Polymere enthalten vorzugsweise von 0,01 bis 30, insbesondere von 0,1 bis 20 Gew.-% Dotierungsmittel.

Die erfindungsgemäßen Polymere können auch feinverteilt in einem weiteren Polymer vorliegen. Sie können u.a. in der Matrix eines thermoplastischen Polymers verteilt sein.

Die Herstellung solcher Polymermischungen ist in EP-A-357 059 beschrieben. Durch die Verteilung der erfindungsgemäßen Polymere in der Matrix eines weiteren Polymers können die Verarbeitbarkeit und die physikalischen Eigenschaften der erfindungsgemäßen Polymere verbessert werden.

### Verfahren

Die erfindungsgemäßen Polymerer können hergestellt werden, indem man
**(A)** mindestens eine Verbindung der Formel (2) 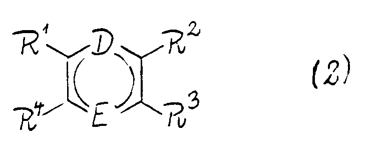 mit mindestens einer Verbindung der Formel (3) 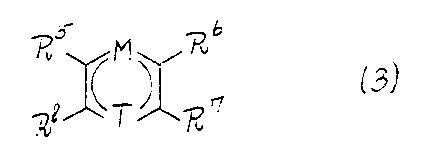 in Gegenwart mindestens eines Schwermetalles und/oder dessen Verbindungen polymerisiert wobei in den obigen Formeln (2) und (3) zwei der Reste
   - **R¹, R², R³** und **R⁴**: Halogenatome, vorzugsweise Bromatome sind und die beiden übrigen der Reste **R¹, R², R³** und **R⁴** Reste der Formel -C(R)=O sind, und zwei der Reste
   - **R⁵, R⁶, R⁷** und **R⁸**: Reste der Formel -B(OR)₂ sind und die beiden übrigen der Reste **R⁵, R⁶, R⁷** und **R⁸** jeweils eine der Bedeutungen vom Rest R haben und **D, E, M, R** und **T** die in Anspruch 2 angegebenen Bedeutungen haben,
**(B)** die Carbonylgruppen in an sich bekannter Weise zu Carbinolgruppen reduziert,
**(C)** das so erhaltene Polymer unter Zyklisierung an den Carbinolgruppen kondensiert und gegebenenfalls
**(D)** das so erhaltenen Polymer in an sich bekannter Weise dehydriert, und, falls erwünscht,
**(E)** dem Polymer Dotierungsmittel zusetzt.

Als in Schritt (A) eingesetzte Schwermetalle und/oder deren Verbindungen sind die als Hydrierungskatalysatoren bekannten Metalle und Metallverbindungen, insbesondere Palladium und Nickel deren Verbindungen bevorzugt.

Die Reduktion in Schritt (B) wird vorzugsweise durch ein Metallhydrid oder eine metallorganische Verbindung bewirkt. Bevorzugte Metallhydride sind Lithium-, Natrium- oder Kaliumhydrid, Lithiumaluminiumhydrid und Natriumborhydrid. Bevorzugte metallorganische Verbindungen sind Metallalkyle, wie n-Butyllithium, sec.Butyllithium, t.-Butyllithium, Phenyllithium, sowie Grignardreagentien.

Schritt (C) erfolgt vorzugsweise in Gegenwart von mindestens einer Brönstedt- oder Lewis-Säure, insbesondere in Gegenwart einer Lewis-Säure.
Beispiele für Lewis-Säuren sind, wie BF₃, AlCl₃, TiCl₃, SnCl₄, SO₃, PCl₅, POCl₃, FeCl₃ und dessen Hydrate und ZnCl₂; Beispiel für Brönstedt-Säuren sind Salzsäure, Bromwasserstoffsäure, Schwefelsäure, Chlorsulfonsäure, Phosphorsäuren, wie ortho-, meta- und Polyphosphorsäuren, Borsäure, selenige Säure, Salpetersäure, Essigsäure, Propionsäure, Halogenessigsäuren, wie Trichlor- und Trifluoressigsäure, Oxalsäure, p-Toluolsulfonsäure, saure Ionenaustauscher, saure Zeolithe, säureaktivierte Bleicherde, säureaktivierter Ruß, Fluorwasserstoff, Chlorwasserstoff und dergleichen mehr.

Schritt (D) kann in Gegenwart bekannter Oxydationsmittel durchgeführt werden. Als solche Oxydationsmittel können auch oxydativ wirkende Dotierungsmittel verwendet werden, was eine weitere Dotierung erübrigt. In Schritt (D) wird vorzugsweise unter Schutzgas gearbeitet, um den Zutritt von Sauerstoff während der Reaktion zu vermeiden.

Das erfindungsgemäße Verfahren kann in Anwesenheit oder in Abwesenheit von Lösungsmitteln durchgeführt werden. Falls Lösungsmittel verwendet werden, sind Lösungsmittel oder Lösungsmittelgemische mit einem Siedepunkt bzw. Siedebereich von bis zu 120° C bei 0,1 MPa bevorzugt. Beispiele für solche Lösungsmittel sind Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Methylisobutylketon; Schwefelkohlenstoff und Nitrobenzol, oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

### Verwendung

Die erfindungsgemäßen Polymere weisen eine erhebliche elektrische Leitfähigkeit auf und besitzen nicht linear optische Eigenschaften.
Sie können in elektrischen, elektronischen und optoelektronischen Bauteilen eingesetzt werden.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20° C.
d) die Gelpermeationschromatogramme mit Polystyrol geeicht.

### Beispiele

### Beispiel 1

**(A)** Zu einer Lösung von 0,725 g 4.4''-Didecyl-2'.5'-dibromterephtalophenon (1mMol) und 0,334 g 2.5-Dihexyl-1.4-phenylendiboronsäure (1mMol) in 5 ml Toluol wurden unter Inertgas 5 ml 2N Natriumcarbonatlösung gegeben. Die so hergestellte Mischung wurde unter Rückfluß erhitzt. Anschließend wurden 30 mg Tetrakis(triphenylphosphino)-palladium(0) (0,026 mMol) in 5 ml Toluol zugegeben. Nach 24 h Sieden unter Rückfluß wurde das gebildete Polymer durch Eingießen in Aceton gefällt, sauer gewaschen und in wenig Toluol aufgenommen. Nach Trocknen der Lösung, einengen und erneuter Fällung durch Aceton werden 535 mg des Polymers der nachfolgenden Formel (13), wobei R=n-Decyl und R'=n-Hexyl.
Ausbeute: 66% der Theorie.

| | | | |
|---|---|---|---|
| Elementaranalyse: | berechnet | C: 86,08 %; | H: 9,96 %; |
| | gefunden | C: 85,85 %; | H: 10,19 %; |

Molmasse gemäß Gelpermeationschromatogramm:
Zahlenmittel (Mₙ): 6500 ; Gewichtsmittel: (M_{w}): 8700 . 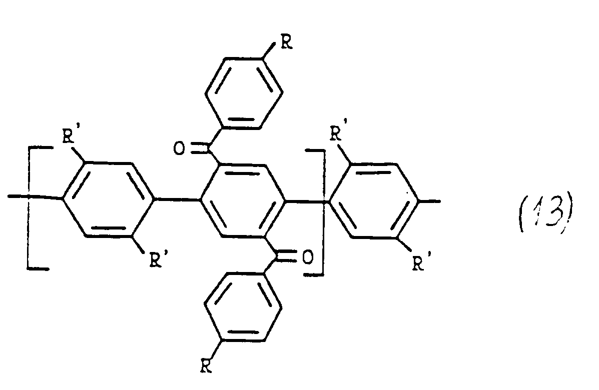
**(B)** 200 mg (0,024 mMol) des gemäß (A) hergestellten Polymers wurden mit LiAlH₄ in 40 ml Toluol/Tetrahydrofuran (1:1) reduziert. Nach 30 min Rühren bei Raumtemperatur wurde das überschüssige Hydrid vorsichtig zersetzt, mit 2 N Salzsäure und mit Wasser gewaschen. Die organische Phase wurde getrocknet, das Lösungsmittelgemisch abdestillier, das Polymer in wenig Tetrahydrofuran aufgenommen und in Wasser gefällt. Erhalten wurden 167 mg des Polymers der nachstehenden Formel (14).
Ausbeute: 84 % der Theorie.

| | | | |
|---|---|---|---|
| Elementaranalyse: | berechnet | C: 85,66 %; | H: 10,41 %; |
| | gefunden | C: 84,12 %; | H: 10,59 %; |

Molmasse gemäß Gelpermeationschromatogramm:
Zahlenmittel (Mₙ): 5100 ; Gewichtsmittel: (M_{w}): 8000 . 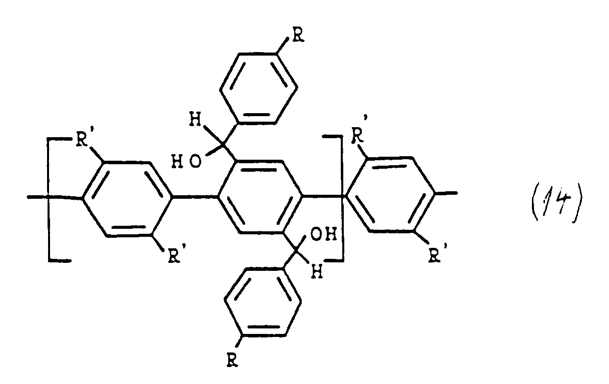
**(C)** 76 mg (0,0934 mMol) des gemäß (B) erhaltenen Polymers wurden in 50 ml Dichlormethan gelöst und mit 300 mg (2,11 mMol) Bortrifluorid-Diethyletherat versetzt. Nach 5 min wurden 20 ml Ethanol und schließlich 50 ml Wasser unter Rühren zugegeben. Die organische Phase wurde gewaschen, getrocknet und eingeengt. Nach Fällung durch Aceton wurden 62 mg eines Polymers der nachstehenden Formel (15) erhalten.
Ausbeute: 85 % der Theorie.

| | | | |
|---|---|---|---|
| Elementaranalyse: | berechnet | C: 89,63 %; | H: 10,37 %; |
| | gefunden | C: 88,77 %; | H: 11,20 %; |

Molmasse gemäß Gelpermeationschromatogramm:
Zahlenmittel (Mₙ): 6200 ; Gewichtsmittel: (M_{w}): 8300 . 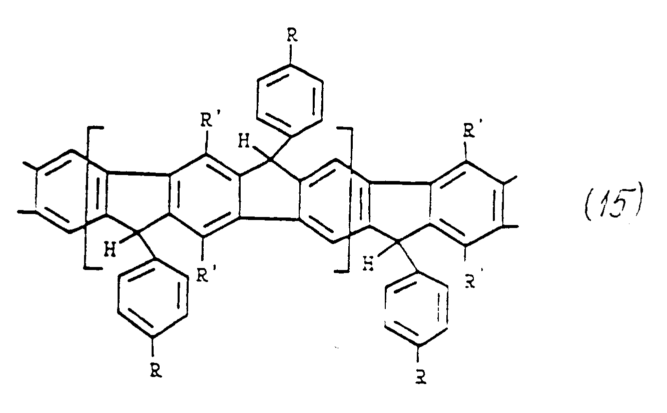
**(D)** 50 mg (0,0643 mMol) des gemäß (C) erhaltenen Polymers wurden in 20 ml Dichlormethan gelöst und solange mit einer 0,1 N Lösung von SbCl₅ in Dichlormethan versetzt, bis die anfänglich auftretende starke Violettfärbung der Lösung zugunsten einer schwach grünlichen Färbung verschwand. Dann wurden 20 ml Wasser unter Stickstoff zugesetzt und 10 min gut gerührt. Die organische Phase wurde mit Wasser nachgewaschen, filtriert und getrocknet. Die Aufarbeitung der Lösung liefert Polymer der nachstehenden Formel (16) als violetten Film oder Niederschlag.

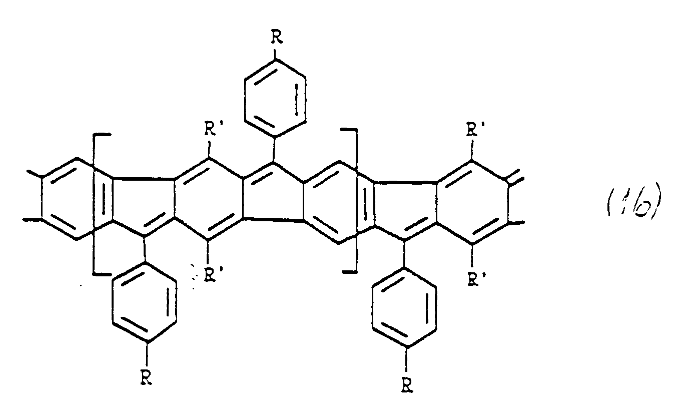

### Beispiel 2:

**(A)** Eine Lösung vom 0,725 g (1mMol) 4.4''-Didecyl-4'.6'-di-brom-isophthalophenon und 0,334 (1 mMol) 2.5-Dihexyl-1.4-phenylendiboronsäure in 5 ml Toluol wurde unter Inertgas zu 5 ml 2N Natriumcarbonatlösung gegeben. Die Mischung wurde unter Rückfluß erhitzt und dann mit 30 mg (0,026 mMol) Tetrakis(triphenylphosphino)-palladium(0) in 5 ml Toluol versetzt. Nach 24 h Sieden unter Rückfluß wurde die Mischung in Methanol gegossen, das so ausgefällte Polymer in wenig Toluol aufgenommen, die Lösung getrocknet und eingeengt. Nach Umfällen mit Methanol wurden 620 mg des Polymers der nachstehenden Formel (17) (R=n-Decyl; R'=n-Hexyl) erhalten.
   Ausbeute: 77 % der Theorie.
   Molmasse gemäß Gelpermeationschromatogramm:
   Zahlenmittel (Mₙ): 5200 ; Gewichtsmittel: (M_{w}): 7100 . 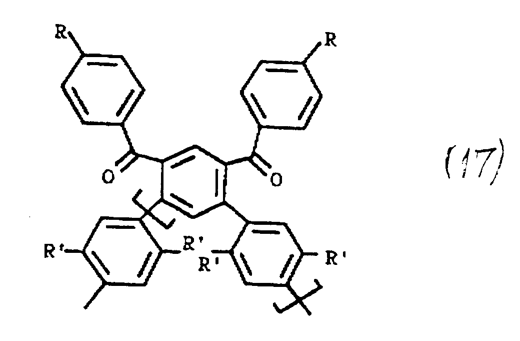
**(B)** Zu einer Lösung von 600 mg (0,741 mMol) des gemäß (A) hergestellten Polymers in 50 ml Toluol wurde eine Suspension von 210 mg (5,52 mMol) LiAlH₄ in Tetrahydrofuran getropft. Nach 30 min Rühren bei Raumtemperatur wurde das überschüssige Hydrid vorsichtig zersetzt und die Mischung mit 2N Salzsäure und mit Wasser gewaschen. Die organische Phase wurde getrocknet, das Lösungsmittelgemisch abdestilliert, das Polymer in wenig Tetrahydrofuran aufgenommen und in Wasser ausgefällt. Erhalten wurden 530 mg des Polymers der nachstehenden Formel (18).
   Ausbeute: 88 % der Theorie. 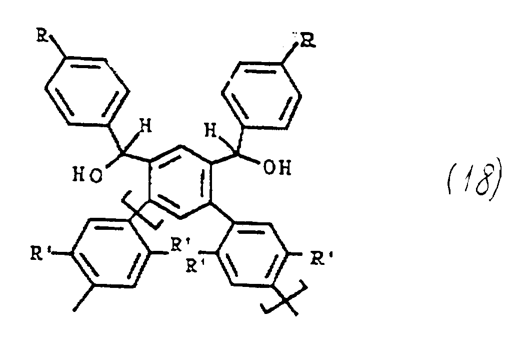
**(C)** 500 mg (0,615 mMol) des gemäß (B) hergestellten Polymers wurden in 30 ml Dichlormethan gelöst und mit 1,8 g (12,7 mMol) Bortrifluorid-Diethyletherat versetzt. Nach 5 min wurden der Mischung unter Rühren 10 ml Ethanol und schließlich 50 ml Wasser zugegeben. Die organische Phase wurde gewaschen, getrocknet und eingeengt. Aus Aceton wurden 430 mg des Polymers der nachstehenden Formel (19) gefällt.
   Ausbeute: 90 % der Theorie. 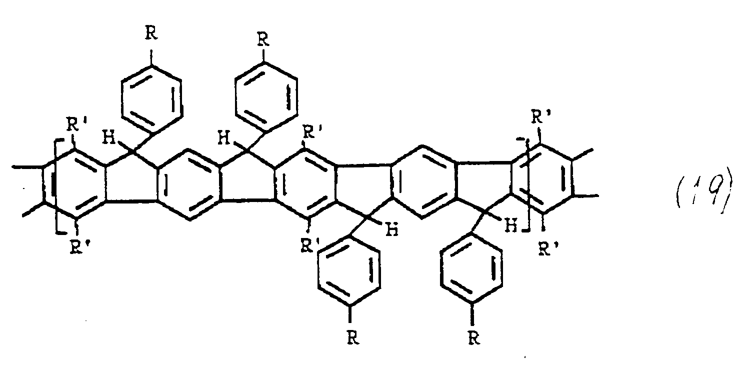
**(D)** Eine Lösung von 50 mg (0,0643 mMol) des gemäß (C) hergestellten Polymers in 20 ml Dichlormethan wurde solange mit 0,1N SbCl₅-Lösung in Dichlormethan versetzt, bis die anfänglich auftretende schwache Violettfärbung der Lösung zugunsten einer Grünfärbung verschwand. Dann wurden 20 ml Wasser unter Stickstoff zugesetzt und 20 min gut gerührt. Die organische Phase wurde abgetrennt, mit Wasser gewaschen, filtriert und getrocknet. Die Aufarbeitung dieser Lösung lieferte Polymer der nachstehenden Formel (20) als schwach violett gefärbten Film oder Niederschlag.

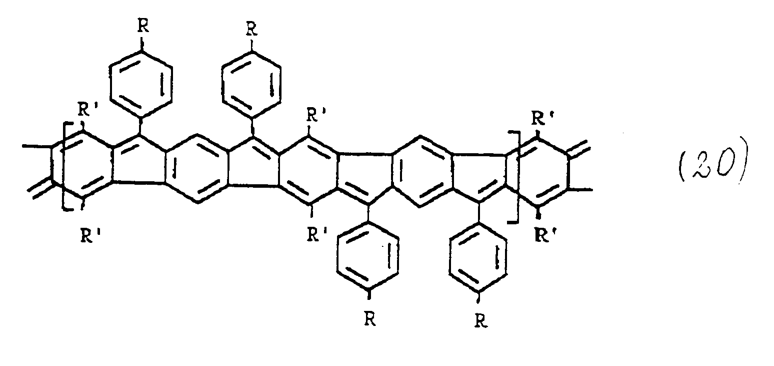

## Patentansprüche

1. Polymere mit einem ausgedehntem System von konjugierten Doppelbindungen, aufgebaut aus homo- und/oder heterozyklischen Ringen, welche jeweils paarweise miteinander verbunden sind, so daß jeweils ein Ring an jeweils zwei vicinalen ringständigen Atomen mit den beiden benachbarten Ringen verknüpft ist,
dadurch gekennzeichnet,
daß eine dieser Verknüpfungen durch eine chemische Bindung zu einem ringständigen Atom des Nachbarringes und die andere über ein Kohlenstoff-, Sauerstoff-, Stickstoff- oder Schwefelatom zu einem dem oben genannten ringständigen Atom vicinalem Atom des Nachbarrings erfolgt.

2. Polymere gemäß Anspruch 1, aufgebaut aus Einheiten der Formel (1) 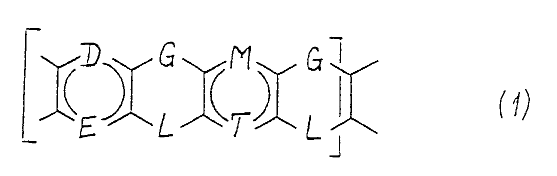 worin bedeuten
**D** und **M** unabhängig voneinander jeweils eine chemische Bindung oder ein Rest der Formel C-R, wobei C für ein Kohlenstoffatom steht und
**R** gleiche oder verschiedene Reste sind, nämlich Wasserstoffatome oder gegebenenfalls substituierte C₁- bis C₂₀-Kohlenwasserstoffreste,
**E** und **T** unabhängig voneinander jeweils ein Sauerstoff- oder Schwefelatom, ein Rest der Formel N-R, oder, falls der zum gleichen Ring gehörige Rest **D** bzw. **M** ein Rest der Formel C-R ist, auch ein Rest der Formel C-R sein kann, pro Ring jeweils einer der Reste
**G** und **L** eine chemische Einfachbindung ist
und pro Ring derjenige der Reste **G** und **L**, der keine Einfachbindung bedeutet, ein Rest der Formel CR₂ ist, wobei vorzugsweise mindestens einer der Reste R ein Wasserstoffatom ist,
sowie gegebenenfalls durch Dehydrierung dieser Polymere herstellbare Polymere.

3. Polymer gemäß Anspruch 1 oder 2, welches 0,01 bis 30 Gewichtsprozent Dotierungsmittel enthält.

4. Verfahren zur Herstellung von Polymeren gemäß Anspruch 1 2 oder 3, wobei man
**(A)** mindestens eine Verbindung der Formel (2) 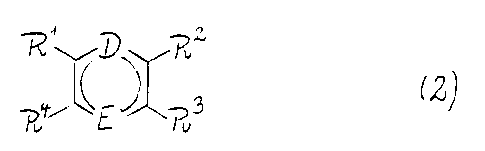 mit mindestens einer Verbindung der Formel (3) 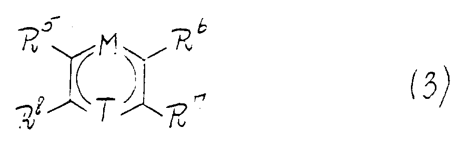 in Gegenwart mindestens eines Schwermetalles und/oder dessen Verbindungen polymerisiert wobei in den obigen Formeln (2) und (3) zwei der Reste
**R¹, R², R³** und **R⁴** Halogenatome, vorzugsweise Bromatome sind und die beiden übrigen der Reste **R¹, R², R³** und **R⁴** Reste der Formel -C(R)=O sind, und zwei der Reste
**R⁵, R⁶, R⁷** und **R⁸** Reste der Formel -B(OR)₂ sind und die beiden übrigen der Reste **R⁵, R⁶, R⁷** und **R⁸** jeweils eine der Bedeutungen vom Rest R haben und **D, E, M, R** und **T** die in Anspruch 2 angegebenen Bedeutungen haben,
**(B)** die Carbonylgruppen in an sich bekannter Weise zu Carbinolgruppen reduziert,
**(C)** das so erhaltene Polymer unter Zyklisierung an den Carbinolgruppen kondensiert und gegebenenfalls
**(D)** das so erhaltenen Polymer in an sich bekannter Weise dehydriert, und, falls erwünscht,
**(E)** dem Polymer Dotierungsmittel zusetzt.

5. Polymere gemäß einem der Ansprüche 1 bis 3 oder nach dem Verfahren gemäß Anspruch 4 herstellbare Polymere, welche feinverteilt in einem weiteren Polymer vorliegen.

6. Verwendung des Polymers gemäß Anspruch 1, 2, 3 oder 5 oder des gemäß Anspruch 4 oder 5 herstellbaren Polymeren in elektrischen, elektronischen und optoelektronischen Bauteilen.

## Claims

1. Polymers having an extended system of conjugated double bonds, built up from homocyclic and/or heterocyclic rings which are each bonded to one another in pairs, so that each ring is linked to the two adjacent rings through in each case two vicinal ring atoms, characterized in that one of these links is formed by a chemical bond to a ring atom of the adjacent ring and the other is formed via a carbon, oxygen, nitrogen or sulphur atom to an atom of the adjacent ring which is vicinal to the abovementioned ring atom.

2. Polymers according to Claim 1, built up from units of the formula (1) 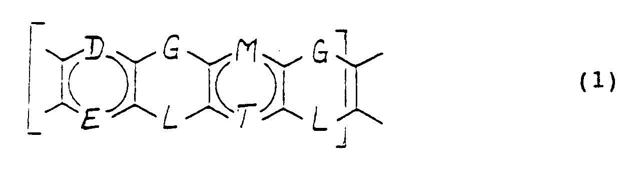 in which
D and M, independently of one another, are each a chemical bond or a radical of the formula C-R in which C is a carbon atom, and
R are identical or different radicals, namely hydrogen atoms or optionally substituted C₁- to C₂₀-hydrocarbon radicals,
E and T, independently of one another, are each an oxygen or sulphur atom, a radical of the formula N-R, or, if the radical D or M belonging to the same ring is a radical of the formula C-R, may alternatively be a radical of the formula C-R, and in each ring one of the radicals
G and L is a single chemical bond,
and in each ring the radical of G and L which is not a single bond is a radical of the formula CR₂, where at least one of the radicals R is preferably a hydrogen atom,
or a polymer which can be prepared by dehydrogenation of this polymer.

3. Polymers according to Claim 1 or 2, which contains from 0.01 to 30 per cent by weight of a dope.

4. Process for the preparation of polymers according to Claim 1, 2 or 3, which comprises
(A) polymerizing at least one compound of the formula (2) 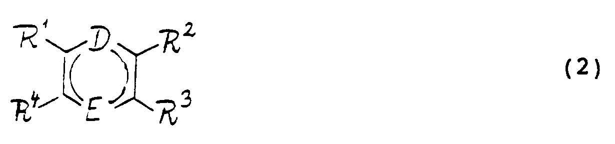 with at least one compound of the formula (3) 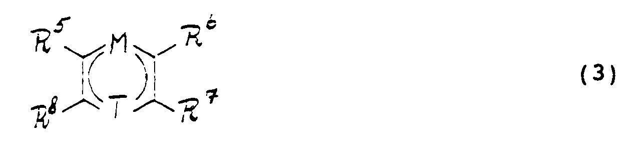 in the presence of at least one heavy metal and/or compounds thereof,
where, in the above formulae (2) and (3), two of the radicals
R¹, R², R³ and R⁴ are halogen atoms, preferably bromine atoms, and the other two of the radicals R¹, R², R³ and R⁴ are radicals of the formula -C(R)=O, and two of the radicals
R⁵, R⁶, R⁷ and R⁸ are radicals of the formula -B(OR)₂, and the two other radicals R⁵, R⁶, R⁷ and R⁸ are each as defined for the radical R, and D, E, M, R and T are as defined in Claim 2,
(B) reducing the carbonyl groups to carbinol groups in a manner known per se,
(C) condensing the resultant polymer with the carbinol groups with cyclization, and optionally
(D) dehydrogenating the resultant polymer in a manner known per se, and, if desired,
(E) adding dopes to the polymer.

5. Polymers according to any one of Claims 1 to 3 or polymers which can be prepared by the process according to Claim 4, which are finely distributed in a further polymer.

6. Method of using the polymer according to Claim 1, 2, 3 or 5 or of the polymer which can be prepared according to Claim 4 or 5, in electrical, electronic and opto-electronic components.

## Revendications

1. Polymère ayant un système étendu de doubles liaisons conjuguées, constitué de noyaux homo- et/ou hétérocycliques qui sont reliés entre eux deux à deux de façon que chaque noyau soit rattaché aux deux noyaux voisins à chaque fois au niveau de deux atomes cycliques adjacents, caractérisé en ce que l'un de ces rattachements se fait par l'intermédiaire d'une liaison chimique à un atome cyclique du noyau voisin et en ce que l'autre s'effectue par l'intermédiaire d'un atome de carbone, d'oxygène, d'azote ou de soufre à un atome du cycle voisin adjacent à l'atome cyclique précité.

2. Polymère selon la revendication 1, constitué d'unités de formule (1) 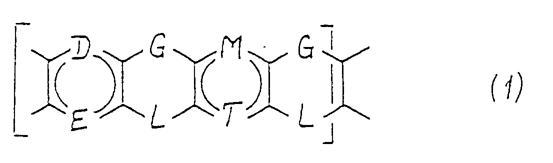 dans laquelle
D et M représentent chacun indépendamment l'un de l'autre une liaison chimique ou un reste de formule C-R, où C représente un atome de carbone et
les R sont des restes identiques ou différents, à savoir des atomes d'hydrogène ou des restes hydrocarbonés en C₁₋C₂₀ éventuellement substitués,
E et T représentent chacun, indépendamment l'un de l'autre, un atome d'oxygène ou de soufre, un reste de formule N-R, ou, dans le cas où le reste D ou M appartenant au même noyau est un reste de formule C-R, ils peuvent être aussi un reste de formule C-R,
l'un des restes G et L, par noyau, représente une simple liaison chimique, et celui des restes G et L qui, dans chaque noyau, ne représente pas une simple liaison, est un reste de formule C(R)₂, dans laquelle de préférence au moins l'un des restes R représente un atome d'hydrogène,
et éventuellement les polymères qui peuvent être préparés par déshydrogénation de ces polymères.

3. Polymère selon la revendication 1 ou 2, qui contient 0,01 à 30 % en masse d'un agent de dopage.

4. Procédé de préparation d'un polymère selon la revendication 1, 2 ou 3, selon lequel
(A) on polymérise au moins un composé de formule (2) 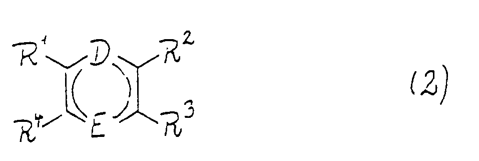 avec au moins un composé de formule (3) 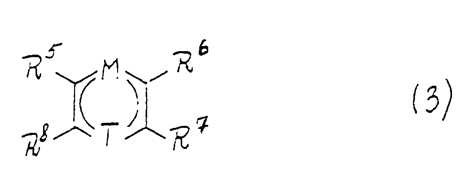 en présence d'au moins un métal lourd et/ou de ses composés, où, dans les formules (2) et (3) ci-dessus,
deux des restes R¹, R², R³ et R⁴ sont des atomes d'halogène, de préférence des atomes de brome, et les deux autres des restes R¹, R², R³ et R⁴ sont des restes de formule -C(R)=O, et
deux des restes R⁵, R⁶, R⁷ et R⁸ sont des restes de formule -B(OR)₂ et les deux autres des restes R⁵, R⁶, R⁷ et R⁸ ont chacun une des significations du reste R et
D, E, M, A et T ont les significations données dans la revendication 2,
(B) on réduit les groupes carbonyle en groupes carbinol de façon connue en soi,
(C) on condense le polymère ainsi obtenu par cyclisation au niveau des groupes carbinol, et éventuellement
(D) on déshydrogène de façon connue en soi le polymère ainsi obtenu et, si désiré,
(E) on ajoute au polymère des agents de dopage.

5. Polymères selon l'une des revendications 1 à 3 ou polymères pouvant être préparés par le procédé selon la revendication 4, qui se trouvent sous forme finement divisée dans un autre polymère.

6. Utilisation du polymère selon la revendication 1, 2, 3 ou 5 ou du polymère pouvant être préparé selon la revendication 4 ou 5 dans des composants électriques, électroniques ou optoélectroniques.
